# EUROPEAN PATENT SPECIFICATION

(11) **EP 1 720 024 B1**
(45) Date of publication and mention of the grant of the patent: **09.04.2008**
(21) Application number: 04789831.7
(22) Date of filing: 13.10.2004
(51) Int. Cl.: G01R 31/08, G08C 15/00, H04J 3/16, H04J 3/22, H04J 3/24, H04L 12/42, H04L 12/56, H04L 29/06

(54) **A METHOD FOR REALIZING THE PSEUDO WIRE EMULATION EDGE-TO-EDGE PROTOCOL**
VERFAHREN ZUM REALISIEREN DES PSEUDOLEITUNGSEMULATIONS-EDGE-TO-EDGE-PROTOKOLLS
PROCEDE DE MISE EN OEUVRE DU PROTOCOLE D'EMULATION DE PSEUDO-CIRCUITS ENTRE ROUTEURS PERIPHERIQUES

(30) Priority: 03.12.2003 CN 200310120067
(43) Date of publication of application: 08.11.2006
(73) Proprietor: Huawei Technologies Co., Ltd., Longgang District, Shenzhen, Guangdong 518129 (CN)
(72) Inventor: JIANG, Zhangzhen Huawei Administration Building, Shenzhen, Guangdong 518129 (CN); HE, Jianfei Huawei Administration Building, Shenzhen, Guangdong 518129 (CN); ZHU, Jianyun Huawei Administration Building, Shenzhen, Guangdong 518129 (CN)
(74) Representative: Davies, Robert Ean
(86) International application number: PCT/CN2004/001165
(87) International publication number: WO 2005/055548

(56) References cited:
- EP-A- 1 303 082
- EP-A- 1 328 090
- EP-A2- 1 303 082
- WO-A-20/04066120
- CN-A- 1 412 979
- US-A1- 2003 142 674
- US-A1- 2006 002 370
- RIVER STONE: "How Ethernet, RPR and MPLS Work Together" INTERNET CITATION, [Online] September 2001 (2001-09), XP002231554 Retrieved from the Internet: URL:http://www.riverstonenet.com/pdf/unifi ed_future.pdf> [retrieved on 2003-02-17]

## Description

### Field of the Invention

The present invention relates to a communication method based on Pseudo Wire Emulation Edge-to-Edge (PWE3) Protocol, and particularly to a method for realizing Pseudo Wire Emulation Edge-to-Edge architecture over a Multi-Protocol Label Switch network.

### Background of the Invention

Multi-Protocol Label Switch (MPLS) is a standard protocol from Internet Engineering Task Force (IETF). MPLS is a label-based Internet Protocol (IP) routing method, which pertains to the scope of Layer 3 Switching technology, introducing a label-based mechanism, thus to separate routing from forwarding, and to specify by a label the path across which a packet passes the network; and data transmission is implemented through a Label Switch Path (LSP), which converts the packet switching over layer 3 of IP network to that over layer 2 of IP network.

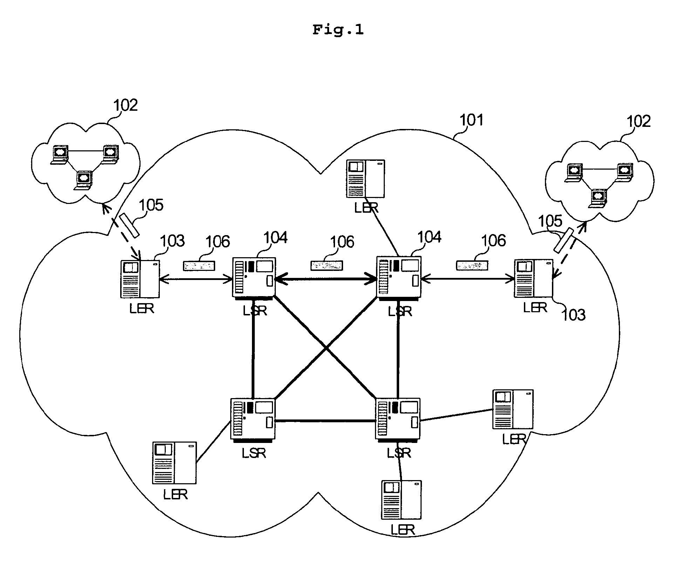

Figure 1 shows the network structure of MPLS. MPLS network 101 is composed of Label Switch Routers (LSRs) 104 at the core part and Label Edge Routers (LERs) 103 at the edge part. LER 103 is designed to analyze the IP packet header, perform layer 3 network functions, and decide corresponding transfer level and Label Switch Path, being connected to an external network 102 and receiving external packets 105 from the external network 102; and LSR 104 is designed to establish LSPs, perform label switch mechanism and quality of service (QoS) guarantee, and forward packets 106 inside the MPLS network 101, being composed of control unit and switch unit, residing in the network, and being connected to LERs 103 and other LSRs 104.

The label switching workflow of MPLS is as follows: preliminarily to establish a routing table and a label mapping table in the LSR by Label Distribution Protocol (LDP) and traditional routing protocols such as Open Shortest Path First (OSPF), etc.; during the operation of the network, firstly the LER at the entrance of the MPLS core network receives an IP packet from the external network, accomplishes the layer 3 network functions, and encapsulates a label into the IP packet; secondly the data packet is transmitted in LSP, at which time the LSR does not apply layer 3 processing to the packet and only forwards it via the switch unit according to the label in the packet, the packet eventually arriving at the other end of the network, i.e. the LER at the exit of the MPLS core network; finally the LER at the exit of the MPLS core network removes the label in the packet and forwards it according to corresponding external network protocols.

Since MPLS technology isolates the label distribution mechanism from the data stream, it can be implemented without relying on a specific Data Link Layer protocol and may support a plurality of Physical Layer and Data Link Layer technologies. Now services of MPLS over Frame Relay(FR), Asynchronous Transfer Mode(ATM) and Point-to-Point Protocol (PPP) links, and Institute of Electrical and Electronics Engineers (IEEE) 802.3 local area network have been implemented. Employing MPLS networks to forward IP services may simplify the route forwarding procedure between layers, speed up the MPLS switching, improve the network efficiency, and meanwhile meet the transferring of services with different classes, so that MPLS has not only a high speed and a traffic control capability of a switch, but also flexible functions and quality of service guarantee mechanism of a router.

Packet Switch Network (PSN) is the developing trend of telecommunication networks, mainly carrying IP services; since IP services have not brought good returns to network operators and PSNs are required to be compatible backwards with a huge amount of current non-IP network devices, for the service development, it is needed to reserve communication networks with other switch modes in the environment of packet switching network. Pseudo Wire Emulation Edge-to-Edge drafted by a working group of IETF is a mechanism for providing traditional Layer 1 (L1) and Layer 2 (L2) network services over PSNs. The developing object of PWE3 is to form a uniform multi-service network platform. Here, the PSNs contains IP (IPv4, IPv6) networks and MPLS networks described above, and the emulated L1, L2 network services may be network services such as digital Time Division Multiplexing (TDM), FM, ATM, Ethernet, High-Level Data Link Control (HDLC), PPP, etc.

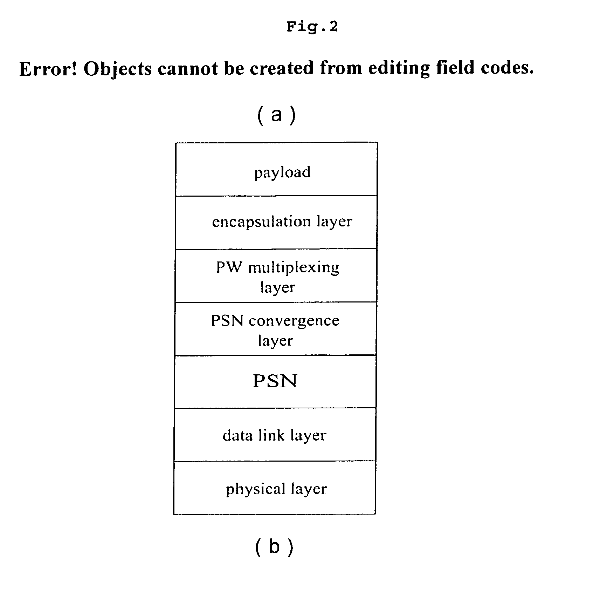

Figure 2 (a) shows the structure of a PWE3 network over a PSN. Two Provider Edges (PE) PE 202 and PE 203 on the edge of the PSN network 201 provide one or more Pseudo Wires (PWs) 206 for the customer edges (CEs) CE 204 and CE 205, to which they are connected, allowing communication between CEs over the PSN network 201.

Here, the Pseudo Wire means that traditional communication mechanisms such as Point-to-Point etc. may be established between both parties of the communication, and the specific network implementation modes are transparent. A Pseudo Wire is implemented based on the tunnel mechanism over PSN. Native data units appeared at PW End Service (PWES), such as bits, cells, packets, are firstly encapsulated into a PW Protocol Data Unit (PW-PDU) and then transferred across the underlying network via a PSN tunnel. The PE performs a necessary encapsulation and decapsulation of PW-PDU, and handles any other functions required by the PW services, such as sequencing or timing. Herein, the PW services refer to the traditional communication services emulated by PWE3. Multicasting services can be accomplished by means of duplicating packet payloads into a plurality of Point-to-Point PWs; or accomplished by way of the inherent Point to Multi-Point PWs, but which requires using multicasting mechanisms provided by underlying PSNs, and with the support of Point to Multi-Point PSN tunnels. The PE receives native data units from the CE, including both payloads and signalings, and performs some operations before sending them to the PW, such operations being called a Pre-processing (PREP). The PREP includes functions of Forwarding (FWD) and Native Service Processing (NSP). A PW multiplexing between two PEs may be implemented over one PSN tunnel with the PW maintaining mechanism and signaling supporting mechanism.

The PW provides the CE with an emulated physical or virtual connection to its remote peer. Native data units from the CE are encapsulated through an encapsulation layer by the sending PE, and then sent over the PSN to the receiving PE; the receiving PE removes the encapsulation and restores the payload to its original format for transmission to the destination CE.

The protocol structure implemented by the PWE3 architecture is shown in figure 2 (b). The payload is transported over the encapsulation layer which contains the information that has not presented within the payload itself but is needed for the peer PE to send the payload to the CE via the physical interface; if there is no need for information besides those contained in the payload itself, there can be no need for the encapsulation layer. The PW multiplexing layer provides the ability to deliver a plurality of PWs over a single PSN tunnel, wherein the identifying of each tunnel is a task of the PSN layer, and the identification of a particular PW in each tunnel should be unique. The PSN convergence layer serves to enhance the interfaces of PSN, thus to achieve the consistence with a PW interface for the PSN, or to make the PW independent of the type of PSN; if the PSN has already met the service requirements, the PSN convergence layer is empty.

When realizing the PWE3 architecture over a MPLS network, the MPLS external label provides the PSN tunnel function, and the use of MPLS internal label provides the PW multiplexing function. The tunnel label and the PW label constitute a label stack, conforming to the concept of MPLS label stack. Since the MPLS allows popping up the label at the last but one hop of LSP during the upward transfer to the destination, thus the external label would not be seen when the PWE3 arrives at the edge PE of the MPLS. Using the internal and external two layers of labels enables the edge PE to receive at least one label at any cases and to obtain enough information to perform an output operation. A tunnel is a path for a PE to transfer data across the MPLS networks to a peer PE, and a plurality of PWs can be multiplexed in a single tunnel.

Resilient Packet Ring (RPR) is a new Media Access Control (MAC) layer protocol proposed for optimizing the transmission of data packets, for whose standardization the IEEE 802.17 work group is responsible.

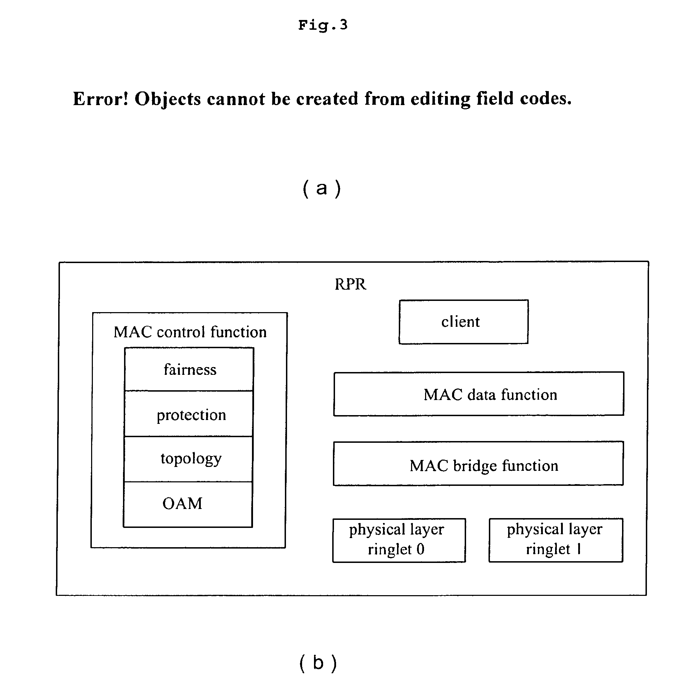

Figure 3 (a) shows the network structure of RPR. RPR network is a data optimized network, with at least two counter-rotating fiber ringlets, in which multiple nodes sharing the bandwidth without the requirement of provisioning circuit. Via a fairness control algorithm, the nodes on the ring network can automatically negotiate for bandwidth among themselves. Each node has a ring-like network topology map and can send data over the fiber ringlets towards its destination node. Both ringlets are used as working channels. In order to prevent link break due to the failure of fiber or node, a protection algorithm is used to eliminate the corresponding failure segment. A node can transmit a packet to a named node by using a unicast destination address, and can also transmit the packet to a plurality of nodes by using a multicast destination address. RPR supports three service classes with different priorities.

Figure 3 (b) shows the MAC protocol structure of RPR. In which, the MAC data function serves to send and receive data packets; the MAC control function serves to transfer the working state of the ring network; and the MAC bridge function serves to provide L2 relay services, such as non-limited/limited MAC services, for the native nodes on the Ring. And the MAC control function includes the following subunits: a fairness control unit for ensuring the fairness eligible bandwidth is shared among the nodes on the ring network; a protect control unit for providing the protection against both nodes and span failures, maintaining a state machine and database by communicating with other nodes on the ring network; a topology control unit for maintaining topology data and state machine and communicating this information with other nodes on the ring network; an Operation Administration Maintenance (OAM) control unit for providing configuration and fault state functions. The processing of a packet for the MAC protocol of RPR includes the following mechanisms: Once a packet is sent to the ring network, the packet is transferred to the destination node to avoid missing of the packet; the packet arrives in the same order as sent and the reordering of the packet is not needed at the receiving node; and the nodes on the network may transfer the packet transparently without packet duplication.

RPR can operate over multiple Physical Layer mediums, e.g. Synchronous Optical Network (SONET), Ethernet, etc.

RPR differs from the traditional Data Link Layers in that the RPR has a more effective bandwidth, can support a plurality of services, and is easy to manage and has flexibility and extensibility. Therefore RPR has a broad application prospect.

Currently the Date Link Layers of MPLS networks mostly employ HDLC/PPP or Ethernet. When MPLS networks employ HDLC/PPP as the Date Link Layer, typically POS interface is used to construct a Point-to-Point connection; and when MPLS networks employ Ethernet as the Data Link Layer, a Local Area Network interface (10, 100M) or a Gigabit Ethernet (10GE) interface is used to construct a one-layer chain, a two-layer tree or a three-layer mesh switch network.

European Patent Application EP1328090 A1 discloses a method for topology discovery in a resilient packet ring. This resilient packet ring comprises a plurality of network modes which are coupled in a ring topology. Each of the nodes exchange information on the topology of said resilient packet ring and additionally holds that information. The exchanging and holding of this information additionally includes information on a back-up node for at least one of said nodes.

The publication "How Ethernet, RPR and MPLS work together" published in September 2001 by Riverstone Networks discloses a method of deployment of multi-protocol label searching (MPLS), resilient packet ring (RPR) and Ethernet systems.

United States Patent Application US2003/142674A1 discloses how a network can be organised to provide virtual private LAN segments (VPLS) services to customers into a network core and an associated number of logical provider edges. Each logical provider edge is partitioned into a plurality of edge-pes and a core-pe.

Therefore, at present the methods for realizing PWE3 architecture mechanism over the Packet Switching Networks of MPLS are all implemented based on the Data Link Layer of HDLC/PPP or Ethernet.

In practice, the above solution has the following problems:
The protection capacity of MPLS networks is not strong enough, the usage of bandwidth is not efficient enough, and the efficiency and quality of service of the carried PWE3 architecture is not high enough.

The main reason for the problems is that the Data Link Layer employed by MPLS is traditional Data Link Layer protocol, without meeting the requirements of the networks in the future.

### Summary of the Invention

According to the present invention there is provided a method as set forth in claim 1. Embodiments of the present invention will be apparent from the dependent claims, and the description which follows.

### Brief Description of the Drawings

Figure 1 is a schematic view of the network structure of MPLS;

Figure 2 is a schematic view of the network structure and the protocol structure of PWE3;

Figure 3 is a schematic view of the network structure and the protocol structure of RPR;

Figure 4 is the RPR data frame encapsulation format of the data packet of the MPLS carrying PWE3 architecture according to one embodiment of the present invention

### Detailed Description of the Embodiments

In order to make the objects, the technical solutions and the advantages of the present invention clearer, embodiment of the present invention will be described in more details with reference to the drawings.

The present invention implements a PWE3 architecture over a MPLS Packet Switch Network by employing RPR data frames to carry MPLS data transferring. It enables the PWE3 architecture to have the advantages of both MPLS and RPR. Namely, MPLS is employed on the PSN layer of PWE3, and RPR is used as the Data Link Layer of PWE3. The key for the present invention is how to encapsulate a MPLS packet of PWE3 with a RPR data frame.

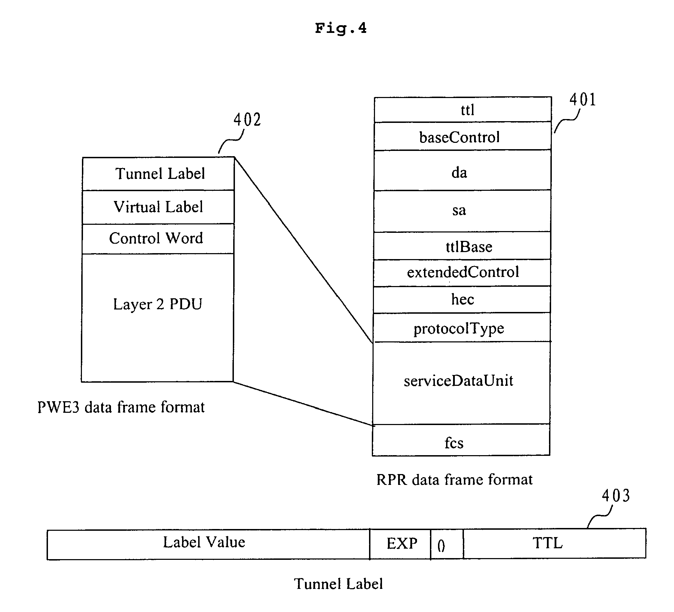

Figure 4 shows the RPR data frame encapsulation format of the data packet of the MPLS carrying PWE3 architecture according to one embodiment of the present invention.

RPR data frame format 401 includes the following data fields respectively according to the sending order: time to live (ttl), with a length of 8 bits, for indicating the maximum number that the data frame may be forwarded over a RPR network, to ensure that the frame do not circulate on a RPR Ring forever to waste network resources; baseControl, with a length of 8 bits, for indicating and controlling the transmission of the data frame, including a plurality of subfields; destination address (da), with a length of 48 bits, for marking the MAC address of the destination node to which the frame is to be sent; source address (sa), with a length of 48 bits, for marking the MAC address of the source node which sends the frame, wherein the MAC address is specified in IEEE802 protocol; ttlBase, with a length of 8 bits, for setting the initial value of the time to live of the data frame transmission; extendedControl, with a length of 8 bits, for extending the function of baseControl; header error checksum (hec), for checking the correctness of the data in the frame header, wherein the frame header includes the aforementioned fields of ttl, baseControl, da, sa, ttlBase and extendedControl; protocolType, with a length of 16 bits, belonging to the load part of the data frame, for indicating the length of the data frame if the value of this field is smaller than 0x600, otherwise for indicating the type of the upper layer protocol of the MAC layer; serviceDataUnit, i.e. the data unit of the upper layer client of MAC, with an undetermined length; frame check sequence (fcs), with a length of 32 bits, for realizing a cyclic redundancy check (CRC) for the frame, wherein the computation range of the CRC is from after the hec field to the end of the frame, i.e. the load of the frame, including the two parts of protocolType and serviceDataUnit.

The baseControl field includes several subfields related to RPR control, in which 2-bit service class (sc) subfield is included for indicating the service class of the RPR data frame. Different service classes are set to realize different quality of services and priorities.

The RPR data frame format 401 is a basic data frame format, and the extended data frame format of RPR also includes: daExtended, with a length of 48 bits, for extending the function of the destination address field; saExtended, with a length of 48 bits, for extending the function of the source address field.

The upper layer client of the MAC layer of the RPR network is the PWE3 architecture over a MPLS network. As shown in Figure 4, in one embodiment of the present invention, the serviceDataUnit in the RPR data frame is the MPLS data frame of PWE3, thus realizing the encapsulation of the service data packet of PWE3 with a RPR data frame.

In the figure, MPLS data frame format 402 of PWE3, which is to be filled into the serviceDataUnit data field of the RPR data frame format 401, includes the following data fields according to the sending order: Tunnel Label 403, i.e. the MPLS label, with a length of 32 bits; Virtual Label (VC Label), i.e. the internal label of the MPLS label stack, with a length of 32 bits, for realizing the multiplex utilization of a plurality of PWs in a single tunnel; Control Word, for performing the control function of MPLS; Layer 2 PDU, i.e. the PDU of Layer 2 service emulated by PWE3, with an undetermined length. The Tunnel Label 403 related to the MPLS protocol in turn includes the following subfields: the first 20 bits is Label Value, i.e. used to mark the tunnel for transmission; the next 3 bits is Experimental Use (EXP) reserved for experiment specially, but used to indicate the service priority of the MPLS frame in some applications; the next 1 bit is Bottom of Stack, representing the bottom of the label stack when being set to 1 and representing others when being set to 0 (here it is set to 0); the next 8 bits is Time to Live (TTL), indicating the maximum number that the frame may be forwarded in the network to avoid the unlimited forwarding.

The method of the present invention for implementing the transmission of a MPLS data packet of PWE3 over a RPR includes the basic steps as follows:

the first step is to encapsulate a MPLS data frame into a RPR data frame;

the second step is to send the RPR data frame to the destination node via RPR;

the third step is to decapsulate the RPR data frame back to a PSN layer data frame at the destination node. The PSN layer data frame is the MPLS data frame. The decapsulation is a reverse process of the aforementioned encapsulation, i.e. is to remove the RPR header and to extract the payload. Note that the prior MPLS only defines two kinds of Data Link Layer technologies for carrying MPLS ----- i.e. Ethernet MAC and PPP protocol. Now we add the RPR as an option.

Here the first step(the encapsulation step) further includes the following sub-steps:

Firstly, as described above, encapsulating the PSN layer of PWE3, i.e. the MPLS data frame, directly into a RPR data frame as a payload. In the case that the length of the MPLS data frame exceeds the maximum value that a RPR data frame is able to carry, the MPLS data frame is discarded directly without fragment process. Typically such situation occurs under two conditions, one is that the processing capacity of underlying devices is limited, thus it has to be discarded; the other is that an error occurs on the upper layer with a huge packet appearing, thus it should be discarded. Considering that in practice the client will perform the fragment transmission automatically on the data with an extra length, the fragment transmission is not taken into account neither for the Data Link Layer nor for the PSN layer of the RPR.

Secondly, in order to mark the protocol type of the upper layer for the RPR data frame transmission, marking the protocolType field of the RPR to indicate the frame is a MPLS data frame. With reference to the ethertype values specified in RFC 3032 for labeled packets transmitted over LAN, in one embodiment of the present invention, when set to 0x8847, the protocolType value of RPR correspondingly represents what is carried is a MPLS unicast data frame; and when set to 0x8848, it correspondingly represents what is carried is a MPLS multicasting data frame.

Thirdly, in one embodiment of the present invention, when the EXP field of the Tunnel Label is used to indicate the service priority, the system maps the priority information to the service class subfield of the baseControl field of the RPR data frame, with the mapping rule determined by the system designer according to actual needs, for example, mapping by the sequence of priorities. In another embodiment of the present invention, a plurality of factors such as service class, priority, label of the PSN etc. are considered in determining the mapping into the RPR service priority and the recording into the service class subfield of the baseControl field of the RPR data frame. It thus implements the reflection of the service class of an upper layer protocol in an underlying layer, enables the transmission of each layer in the network to be performed fully according to service levels, ensuring the QoS better.

After implementing the method for carrying a MPLS data packet of PWE3 over a RPR data frame, the present invention allows the PWE3 over a MPLS network with a RPR as the Data Link Layer. The realizing methods for the respective layers conform to standard operations, for example, the transmission methods of RPR data frames and the encapsulation and transmission methods of other types of frames conforming to IEEE802.17, and the transmission control methods of MPLS data packets and the operation methods of PWE3 conforming to IETF standards.

The people skilled in the art may understand that the sub-steps in the first step (encapsulation step) described above may operate with any combination, without affecting the essential and the scope of the present invention.

## Claims

1. A method for realizing Pseudo Wire Emulation Edge-to-Edge Protocol, comprising :
encapsulating a Packet Switch Network layer data frame (402) of the Pseudo Wire Emulation Edge-to-Edge Protocol into a Resilient Packet Ring data frame (401);
sending the Resilient Packet Ring data frame (401) to a destination node via a Resilient Packet Ring;
decapsulating the Resilient Packet Ring data frame (401) back to the Packet Switch Network layer data frame (402) at the destination node;
**characterized in that** the encapsulating step comprises:
judging whether the length of the Packet Switch Network layer data frame (402) is smaller than or equal to the maximum payload length of the Resilient Packet Ring data frame; if so, encapsulating the Packet Switch Network layer data frame (402) directly into the Resilient Packet Ring data frame (401) as a payload, otherwise discarding the Packet Switch Network layer data frame (402).

2. The method for realizing Pseudo Wire Emulation Edge-to-Edge Protocol according to claim 1, wherein the Packet Switch Network layer of the Pseudo Wire Emulation Edge-to-Edge Protocol employs Multi-Protocol Label Switch protocol.

3. The method for realizing Pseudo Wire Emulation Edge-to-Edge Protocol according to claim 2, wherein the Data Link Layer of the Pseudo Wire Emulation Edge-to-Edge Protocol is the Resilient Packet Ring.

4. The method for realizing Pseudo Wire Emulation Edge-to-Edge Protocol according to claim 3, wherein the step of encapsulating a Packet Switch Network layer data frame (402) of the Pseudo Wire Emulation Edge-to-Edge Protocol into a Resilient Packet Ring data frame (401) further comprises the following step of:
taking the Packet Switch Network layer data frame (402) directly as the serviceDataUnit in the basic frame format of the Resilient Packet Ring.

5. The method for realizing Pseudo Wire Emulation Edge-to-Edge Protocol according to claim 4, wherein the step of encapsulating a Packet Switch Network layer data frame (402) of the Pseudo Wire Emulation Edge-to-Edge Protocol into a Resilient Packet Ring data frame (401) further comprises the following step of:
judging whether the Packet Switch Network layer data frame (402) is a unicast data frame or a multicast data frame; if the Packet Switch Network layer data frame (402) is a unicast data frame, setting the hexadecimal value of the protocolType field of the Resilient Packet Ring data frame (401) as 0x8847; if the Packet Switch Network layer data frame (402) is a multicast data frame, setting the hexadecimal value of the protocolType field of the Resilient Packet Ring data frame (401) as 0x8848.

6. The method for realizing Pseudo Wire Emulation Edge-to-Edge Protocol according to claim 4, wherein the step of encapsulating a Packet Switch Network layer data frame (402) of the Pseudo Wire Emulation Edge-to-Edge Protocol into a Resilient Packet Ring data frame (401) further comprises the following step of:
mapping the Experimental Use subfield of the tunnel label field of the Packet Switch Network layer data frame (402) directly to the service class subfield of the baseControl field of the Resilient Packet Ring data frame (401) according to the order of service priority.

7. The method for realizing Pseudo Wire Emulation Edge-to-Edge Protocol according to claim 4, wherein the step of encapsulating a Packet Switch Network layer data frame (402) of the Pseudo Wire Emulation Edge-to-Edge Protocol into a Resilient Packet Ring data frame (401) further comprises the following step of:
determining the service class subfield of the baseControl field of the Resilient Packet Ring data frame (401) according to the integrated effect of the service class, the service priority and the label of the Packet Switch Network layer data frame (402).

8. The method for realizing Pseudo Wire Emulation Edge-to-Edge Protocol according to claim 1, wherein the step of decapsulating the Resilient Packet Ring data frame (401) back to the Packet Switch Network layer data frame (402) at the destination node comprises the following step of:
removing the header of the Resilient Packet Ring data frame (401), extracting the payload of the Resilient Packet Ring data frame (401) as the Packet Switch Network layer data frame (402).

## Patentansprüche

1. Verfahren zum Realisieren des Pseudowire-Emulation-Edge-to-Edge-Protokolls, umfassend:
Verkapseln eines Packet-Switch-Netzwerkschicht-Datenframes (402) des Pseudowire-Emulation-Edge-to-Edge-Protokolls in einem Resilient-Packet-Ring-Datenframe (401),
Senden des Resilient-Packet-Ring-Datenframes (401) über ein Resilient Packet Ring zu einem Zielknoten und
Entkapseln des Resilient-Packet-Ring-Datenframes (401), an dem Zielknoten, zurück in den Packet-Switch-Netzwerkschicht-Datenframe (402),
**dadurch gekennzeichnet, dass** der Verkapselungsschritt umfasst:
Feststellen, ob die Länge des Packet-Switch-Netzwerkschicht-Datenframes (402) kleiner als die maximale Nutzdatenlänge des Resilient-Packet-Ring-Datenframes oder gleich dieser ist, wenn ja, Verkapseln des Packet-Switch-Netzwerkschicht-Datenframes (402) direkt in dem Resilient-Packet-Ring-Datenframe (401) als Nutzdaten und andernfalls Verwerfen des Packet-Switch-Netzwerkschicht-Datenframes (402).

2. Verfahren zum Realisieren des Pseudowire-Emulation-Edge-to-Edge-Protokolls nach Anspruch 1, wobei die Packet-Switch-Netzwerkschicht des Pseudowire-Emulation-Edge-to-Edge-Protokolls das Multi-Protokoll-Label-Switching-Protokoll verwendet.

3. Verfahren zum Realisieren des Pseudowire-Emulation-Edge-to-Edge-Protokolls nach Anspruch 2, wobei die Datenverbindungsschicht des Pseudowire-Emulation-Edge-to-Edge-Protokolls das Resilient Packet Ring ist.

4. Verfahren zum Realisieren des Pseudowire-Emulation-Edge-to-Edge-Protokolls nach Anspruch 2, wobei der Schritt der Verkapselung eines Packet-Switch-Netzwerkschicht-Datenframes (402) des Pseudowire-Emulation-Edge-to-Edge-Protokolls in einem Resilient-Packet-Ring-Datenframe (401) des Weiteren den folgenden Schritt umfasst:
Annehmen des Packet-Switch-Netzwerkschicht-Datenframes (402) direkt als die Dienstdateneinheit in dem Basis-Frameformat des Resilient Packet Rings.

5. Verfahren zum Realisieren des Pseudowire-Emulation-Edge-to-Edge-Protokolls nach Anspruch 4, wobei der Schritt der Verkapselung eines Packet-Switch-Netzwerkschicht-Datenframes (402) des Pseudowire-Emulation-Edge-to-Edge-Protokolls in einem Resilient-Packet-Ring-Datenframe (401) des Weiteren den folgenden Schritt umfasst:
Feststellen, ob der Packet-Switch-Netzwerkschicht-Datenframe (402) ein Unicast-Datenframe oder ein Multicast-Datenframe ist, falls der Packet-Switch-Netzwerkschicht-Datenframe (402) ein Unicast-Datenframe ist, Einrichten des Hexadezimalwertes des Feldes Protokolityp des Resilient-Packet-Ring-Datenframes (401) als 0x8847, falls der Packet-Switch-Netzwerkschicht-Datenframe (402) ein Multicast-Datenframe ist, Einrichten des Hexadezimalwertes des Feldes Protokolltyp des Resilient-Packet-Ring-Datenframes (401) als 0x8848.

6. Verfahren zum Realisieren des Pseudowire-Emulation-Edge-to-Edge-Protokolls nach Anspruch 4, wobei der Schritt der Verkapselung eines Packet-Switch-Netzwerkschicht-Datenframes (402) des Pseudowire-Emulation-Edge-to-Edge-Protokolls in einem Resilient-Packet-Ring-Datenframe (401) des Weiteren den folgenden Schritt umfasst:
Mapping des Teilfeldes Experimental Use des Feldes TunneiLabel des Packet-Switch-Netzwerkschicht-Datenframes (402) direkt in das Teilfeld Dienstklasse des Feldes baseControl des Resilient-Packet-Ring-Datenframes (401) entsprechend der Reihenfolge der Dienstpriorität.

7. Verfahren zum Realisieren des Pseudowire-Emulation-Edge-to-Edge-Protokolls nach Anspruch 4, wobei der Schritt der Verkapselung eines Packet-Switch-Netzwerkschicht-Datenframes (402) des Pseudowire-Emulation-Edge-to-Edge-Protokolls in einem Resilient-Packet-Ring-Datenframe (401) des Weiteren den folgenden Schritt umfasst:
Festlegen des Teilfeldes Dienstklasse des Feldes baseControl des Resilient-Packet-Ring-Datenframes (401) entsprechend dem integrierten Effekt der Dienstklasse, der Dienstpriorität und des Labels des Packet-Switch-Netzwerkschicht-Datenframes (402).

8. Verfahren zum Realisieren des Pseudowire-Emulation-Edge-to-Edge-Protokolls nach Anspruch 4, wobei der Schritt des Entkapselns, an dem Zielknoten, des Resilient-Packet-Ring-Datenframes (401) zurück in den Packet-Switch-Netzwerkschicht-Datenframe (402) den folgenden Schritt umfasst:
Entfernen des Headers des Resilient-Packet-Ring-Datenframes (401) und Extrahieren der Nutzdaten des Resilient-Packet-Ring-Datenframes (401) als den Pakket-Switch-Netzwerkschicht-Datenframe (402).

## Revendications

1. Procédé pour réaliser un protocole d'émulation pseudo-filaire de bout en bout, comprenant :
l'encapsulation d'une trame de données (402) d'une couche de réseau à commutation de paquets du protocole d'émulation pseudo-filaire de bout en bout dans une trame de données (401) d'anneau de paquets résilients ;
l'envoi de la trame de données (401) d'anneau de paquets résilients à un noeud de destination via un anneau de paquets résilients ;
le désencapsulation de la trame de données (401) de l'anneau de paquets résilients pour la renvoyer à la trame de données (402) de la couche de réseau à commutation de paquets au noeud de destination ;
**caractérisé en ce que** l'étape d'encapsulation consiste :
à juger si la longueur de la trame de données (402) de la couche de réseau à commutation de paquets est plus petite ou égale à la longueur de charge utile maximale de la trame de données de l'anneau de paquets résilients ; si tel est le cas, à encapsuler la trame de données (402) de la couche à commutation de paquets directement dans la trame de données (401) de l'anneau de paquets résilients comme charge utile, à rejeter autrement la trame de données (402) de la couche de réseau à commutation de paquets.

2. Procédé pour réaliser un protocole d'émulation pseudo-filaire de bout en bout selon la revendication 1, dans lequel la couche de réseau à commutation de paquets du protocole d'émulation pseudo-filaire de bout en bout emploie un protocole de commutation à étiquette multiprotocole.

3. Procédé pour réaliser un protocole d'émulation pseudo-filaire de bout en bout selon la revendication 2, dans lequel la couche de liaison de données du protocole d'émulation pseudo-filaire de bout en bout est l'anneau de paquets résilients.

4. Procédé pour réaliser un protocole d'émulation pseudo-filaire de bout en bout selon la revendication 3, dans lequel l'étape d'encapsulation d'une trame de données (402) de couche de réseau à commutation de paquets du protocole d'émulation pseudo-filaire de bout à bout dans une trame de données d'anneau de paquets résilients (401) comprend en outre l'étape consistant :
à prendre la trame de données (402) de la couche de réseau à commutation de paquets directement comme unité de données de service dans le format de trame de base de l'anneau de paquets résilients.

5. Procédé pour réaliser un protocole d'émulation pseudo-filaire de bout en bout selon la revendication 4, dans lequel l'étape d'encapsulation d'une trame de données (402) de la couche de réseau à commutation de paquets du protocole d'émulation pseudo-filaire de bout en bout dans une trame de données (401) de l'anneau de paquets résilients comprend en outre l'étape suivante consistant :
à juger si la trame de données (402) de la couche de réseau à commutation de paquets est une trame de données à diffusion unique ou une trame de données à diffusion multiple ; si la trame de données (402) de la couche de réseau à commutation de paquets est une trame de données à diffusion unique, à régler la valeur hexadécimale du champ protocolType de la trame de données (401) de l'anneau de paquets résilients à 0x8847 ; si la trame de données (402) de la couche de réseau à commutation de paquets est une trame de données à diffusion multiple, à régler la valeur hexadécimale du champ protocolType de la trame de données (401) de l'anneau de paquets résilients à 0x8848.

6. Procédé pour réaliser un protocole d'émulation pseudo-filaire de bout en bout selon la revendication 4, dans lequel l'étape d'encapsulation d'une trame de données (402) de la couche de réseau à commutation de paquets du protocole d'émulation pseudo-filaire de bout en bout dans une trame de données (401) d'anneau de paquets résilients comprend en outre l'étape suivante consistant :
à cartographier le sous-champ d'usage expérimental du champ d'étiquette de tunnel de la trame de données (402) de couche de réseau à commutation de paquets (402) directement sur le sous-champ de classe de service du champ baseControl de la trame de données (401) de l'anneau de paquets résilients selon l'ordre de priorité du service.

7. Procédé pour réaliser un protocole d'émulation pseudo-filaire de bout en bout selon la revendication 4, dans lequel l'étape d'encapsulation d'une trame de données (402) de la couche de réseau à commutation de paquets du protocole d'émulation pseudo-filaire de bout en bout dans une trame de données (401) d'anneau de paquets résilients comprend en outre l'étape suivante consistant :
à déterminer le sous-champ de classe de service du champ baseControl de la trame de données (401) d'anneau de paquets résilients selon l'effet intégré de la classe de service, la priorité de service et l'étiquette de la trame de données (402) de la couche de réseau à commutation de paquets.

8. Procédé pour réaliser un protocole d'émulation pseudo-filaire de bout en bout selon la revendication 1, dans lequel l'étape de désencapsulation de la trame de données (401) d'anneau de paquets résilients pour revenir dans la trame de données (402) de la couche de réseau à commutation de paquets au noeud de destination, comprend l'étape suivante consistant :
à éliminer l'en-tête de la trame de données (401) d'anneau de paquets résilients et à extraire la charge utile de la trame de données (401) d'anneau de paquets résilients comme trame de données (402) de la couche de réseau à commutation de paquets.
